# EUROPEAN PATENT SPECIFICATION

(11) **EP 2 355 441 B1**
(45) Date of publication and mention of the grant of the patent: **22.08.2012**
(21) Application number: 11000285.4
(22) Date of filing: 14.01.2011
(51) Int. Cl.: H04L 29/06, H04L 29/08, H04M 1/725

(54) **Remote CPU-less decompression**
Prozessorfreie Ferndekomprimierung
Décompression à distance sans CPU

(30) Priority: 21.01.2010 US 691605
(43) Date of publication of application: 10.08.2011
(73) Proprietor: Broadcom Corporation, Irvine, CA 92617 (US)
(72) Inventor: Imanilov, Beni, Petah Tikva (IL)
(74) Representative: Jehle, Volker Armin

(56) References cited:
- US-A- 5 534 942
- US-A- 5 838 996
- US-A- 6 002 411
- US-A1- 2002 059 642

## Description

### BACKGROUND OF THE INVENTION

With technology advances, wireless devices have decreased in size. As a result, these devices have become more portable than ever. However, the use of a processor and software applications on the device requires processing power provided by hardware resident in the device. In addition to increased hardware costs associated with the processing of such applications, there are licensing fees associated with such software applications and the device's operating system which increase the cost of such phones to an end user.

Further limitations and disadvantages of conventional and traditional approaches will become apparent to one of skill in the art, through comparison of such systems with some aspects of the present invention as set forth in the remainder of the present application with reference to the drawings.
Document US 6002411 discloses an integrated video and memory controller with data processing and graphical processing capabilities.

### BRIEF SUMMARY OF THE INVENTION

Various aspects of the invention provide a method and a system of decompressing data by a wireless device. The various aspects and representative embodiments of the method and system are substantially shown in and/or described in connection with at least one of the following figures, as set forth more completely in the claims.
According to an aspect of the invention, a method is provided of providing data decompression at a processor-less device comprising:
receiving said data over a first communications channel and control signals over a second communications channel;
storing said data into a memory of said processor-less device; and
using said control signals by a memory controller of said processor-less device to specify and read one or more portions of said data from said memory; and
outputting said one or more portions as decompressed data.
Advantageously, said data and said control signals are received from a server that is part of a wireless carrier's network.
Advantageously, said data received by said processor-less device is used to build a library, wherein said data in said library is reused by said processor-less device to perform said decompression.
Advantageously, said library is updated when said data is stored into said memory.
Advantageously, said control signals are used by said memory controller for displaying an image on said processor-less device, said image generated by reusing said data stored in said memory.
Advantageously, said control signals are used by said memory controller for displaying text on said process-less device, said text generated by reusing said data stored in said memory.
Advantageously, said processor-less device comprises a wireless device.
Advantageously, said wireless device comprises smartphone.
Advantageously, any applications associated with said wireless device are executed using said processor in said server.
According to a further aspect, a processor-less device comprises:
a circuitry for receiving data and control signals comprising compressed data;
a memory for storing said data; and
a memory controller for controlling said memory using said control signals, said control signals specifying the reading and concatenating of one or more portions of said data from said memory, wherein said reading and said concatenating performs a decompression of said compressed data.
Advantageously, said data and control signals are received from a server that is part of a wireless carrier's network.
Advantageously, said data received by said processor-less device is used to build a library, wherein said one or more portions of said data in said library is reused by said processor-less device to perform said decompression.
Advantageously, said library is updated when said data is stored into said memory.
Advantageously, said control signals are used by said memory controller for displaying an image on said processor-less device, said image generated by reusing said data stored in said memory.
Advantageously, said control signals are used by said memory controller for displaying text on said processor-less device, said text generated by reusing said data stored in said memory.
Advantageously, said processor-less device comprises a wireless device.
Advantageously, said wireless device comprises smartphone.
Advantageously, any applications associated with said wireless device are executed using said processor in said server.
According to a further aspect, a system is provided for transmitting data to a wireless device comprising:
a server comprising a processor, said server generating data and control signals; and
a processor-less wireless phone comprising:
   a circuitry for receiving data and control signals from said server, said data and control signals comprising compressed data;
   a memory for storing said data; and
   a memory controller for controlling said memory using said control signals, said control signals specifying the reading and concatenating of one or more portions of said data from said memory, said server comprising a processor for generating said control signals, wherein said reading and said concatenating performs a decompression of said compressed data.
Advantageously, said server is part of a wireless carrier's network.
Advantageously, said data received by said processor-less wireless phone is used to build a library, wherein said one or more portions of said data in said library is reused by said processor-less wireless phone to perform said decompression.
Advantageously, said library is updated when said data is stored into said memory.
Advantageously, said control signals are used by said memory controller for displaying an image on said processor-less wireless phone, said image generated by reusing said data stored in said memory.
Advantageously, said control signals are used by said memory controller for displaying text on said processor-less wireless phone, said text generated by reusing said data stored in said memory.
Advantageously, any applications associated with said processor-less wireless phone are executed using said processor in said server.

These and other advantages, aspects, and novel features of the present invention, as well as details of illustrated embodiments, thereof, will be more fully understood from the following description and drawings.

### BRIEF DESCRIPTION OF THE DRAWINGS

Figure 1 is a block diagram of a system that performs remote CPU-less decompression for a device, in accordance with an embodiment of the invention.

Figure 2 is a block diagram of a system within a device that performs remote CPU-less decompression, in accordance with an embodiment of the invention.

Figure 3 is an operational flow diagram of a method for decompressing data received by a device, in accordance with an embodiment of the invention.

### DETAILED DESCRIPTION OF THE INVENTION

Various aspects of the invention can be found in a method and a system of performing data decompression for a device. The device may comprise a wireless phone such as a smartphone, for example. In a representative embodiment, the device performs decompression of received data without the use of a processor within the device. Instead, the data decompression process utilizes a CPU (central processing unit) provided by a server located at a carrier such as a wireless carrier. In a representative embodiment, a single processor or CPU is used to facilitate compression as well as decompression of data sent to remote devices, wherein the processor or CPU is located at the server. The server remotely controls the decompression process such that the data received by the device is effectively decompressed. The data decompression is performed for the device without the use of a processor or CPU within the device. Therefore, the device of the present invention may be described as a CPU-less or processor-less device.

In a representative embodiment, the device may comprise a wireless phone such as a wireless PDA or smartphone. Furthermore, as opposed to a typical PDA or smartphone, the various aspects of the invention obviate the use of one or more operating systems and software applications that require the use of one or more application processors situated within the device, thereby resulting in a device with reduced manufacturing costs. In addition, the power consumption of the device is lower because of the absence of a processor. The various aspects of the invention utilize a processor located at a server such that the server remotely processes and/or executes the one or more applications required by the device. Thus, the one or more applications that are used by the device are stored at the server. The various aspects of the invention provide for a "brainless smartphone," for example, such that the one or more applications which were once utilized at the smartphone are now executed at a centralized server. The server may be distributed over one or more networks using one or more communicatively coupled servers. The server may be located at a centralized location determined by a wireless carrier or wireless operator, for example. The server may be dedicated to performing compression and decompression for all data being transmitted to a plurality of wireless devices. In a representative embodiment, the server may comprise a number of computation units for executing one or more software applications required by the processor-less device. The server may be able to serve more than one processor-less device simultaneously. The server communicates with each of the one or more wireless devices using two data communications channels to each wireless device. Each of the two data communications channels may transmit data bi-directionally. The communications medium for communicating the data may include any type of wireless communication medium as well as fiber, ADSL, WIFI, WIMAX, LTE, LTE-A, for example.

In a representative embodiment, the server that is located at a wireless carrier, may contain one or more processors and its own memory or storage media. The server has the ability to communicate to a memory of a wireless device, such as a wireless PDA or smartphone, for example. Therefore, the internal memory of the processor-less wireless device may be considered an extension to the memory situated in the server. The processor at the server may perform writing data into and reading data from the wireless device's memory. This writing/reading may take the form of copying and pasting data into and out of different locations in memory such that the desired data is generated by the processor-less wireless device in a decompression process. In this fashion, data may be manipulated under the control of the server's one or more processors. In addition, the server may be used to manage and control any other internal circuitry resident within the processor-less wireless device. The management and control may be accomplished by way of using control signals, information, or commands that are generated by the one or more processors situated in the server.

The server may transmit data to the processor-less wireless device such that the data may be decompressed and stored in a memory of the wireless device. After initially transmitting display data to a wireless device, the server may transmit new data to the memory of the wireless device if the wireless device cannot reuse the data stored in its memory to generate the appropriate image on the display. A saved (pre-defined) display image can be invoked and displayed at the wireless device by way of control signals provided by the server. The memory controller may utilize the control signals to manipulate the data stored in memory as it performs various reads and writes using the memory of the wireless device. Therefore, any portion of the previously saved image may be retrieved from the internal memory at the wireless device by way of the memory controller using the control information provided by the server. By way of using previously stored data in memory and by receiving only data that contains new image information, effective data decompression and bandwidth savings may be realized. For example, when an image has moved slightly upwards, the image may be shifted up by reading out the previously stored image from memory onto the display and shifting the image one horizontal line higher than before while new data for the horizontal line at the bottom of the display may be received from the server. As a result of this process, the data decompression may be effectively accomplished.

When an application is executed, the wireless device may transmit coordinates and/or motion information to the server using buttons or touch keys of the wireless device. The information transmitted to the server may be translated by the wireless device prior before it is sent to the server. The information may be used by the application being executed at the server. When the application involves the decompression of data, the server may remotely control the decompression process by way of sending control signals or control information along with data to allow the wireless device to facilitate decompression of the received data. The decompression process may involve remote memory manipulation of data stored in the memory of the wireless device by way of control information transmitted by the server.

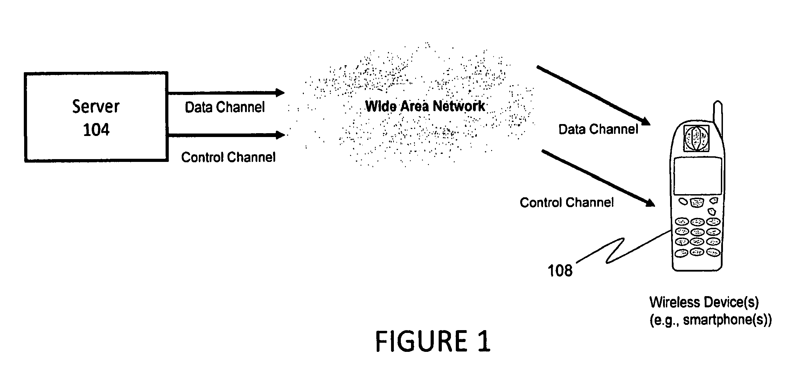

Figure 1 is a block diagram of a system that performs remote CPU-less decompression for a device, in accordance with an embodiment of the invention. The system comprises a server communicatively coupled to one or more devices 108. The one or more devices 108 may comprise one or more wireless devices, such as one or more smartphones, for example. The server 104 may simultaneously communicate to a plurality of wireless devices 108. In a representative embodiment, the server 104 communicates to a wireless device 108 via a wireless wide area network connection over an air interface. The server 104 transmits data through a first communications channel in which the data transmitted may comprise text or display data, for example. The text or display data may be stored in a memory of the wireless device 108. In accordance with the various aspects of the invention, portions of the stored data may be subsequently read from the memory and presented on the screen of the wireless device 108. In addition to transmitting data through the first communications channel, the server 104 also transmits control information/signals through a second communications channel. The control signals may be used to remotely manipulate the data that is received by the wireless device 108. The control signals may be used by a memory controller resident within the wireless device 108. The memory controller controls reading and writing of the data stored in the memory of the wireless device 108 by way of using the control signals. The memory controller receives control information sent by the server 104 to manipulate the data stored in the memory of the wireless device 108. The memory controller may effectively perform a copy and paste of various words stored within memory such that the stored words may be re-used to effectively construct new text or images using the previously stored data. The newly constructed text or image may be subsequently stored in a portion of the memory in the wireless device. By way of re-using the data stored in memory, the previously transmitted data does not need to be re-transmitted. Instead of re-transmitting the same text, control information, using less data, is transmitted such that the total amount of data transmitted through the communications channels is reduced. Thus, the decompression process reduces the required total bandwidth provided by the two communications channels.

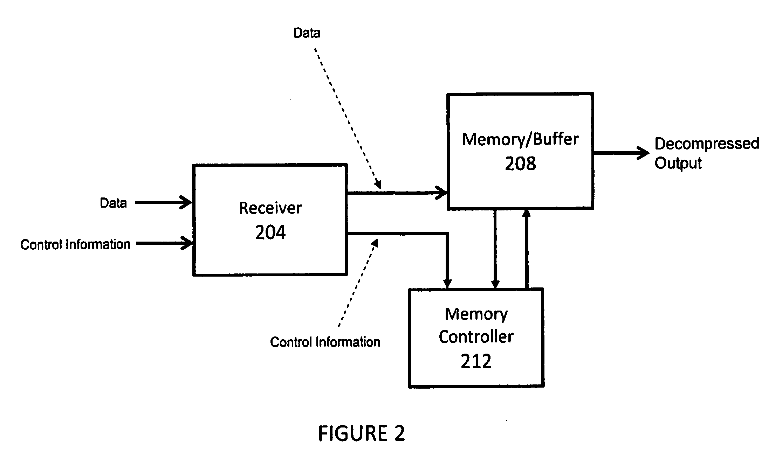

Figure 2 is a block diagram of a system within a device that performs remote CPU-less decompression, in accordance with an embodiment of the invention. The system of Figure 2 may be found within a device such as the device previously described in connection with Figure 1. As illustrated, the device comprises a receiver 204, a memory 208, and a memory controller 212. When the device comprises a wireless device, the receiver 204 provides an air interface to receive wireless signals transmitted by a server. The server may correspond to the server previously described in connection with Figure 1. The receiver 204 receives data from the server through a first communications channel. The receiver 204 comprises any type of circuitry or hardware for demodulating and receiving data through communications channels from the server. The first communications channel may occupy a first bandwidth. Likewise, the receiver 204 receives control information from the server through a second communications channel. The second communications channel may occupy a second bandwidth. When the device comprises a wireless device, the first and second communications channels may occupy bandwidth over a wireless communication network. The receiver 204 transmits the received data to a memory 208 and the received control information to a memory controller 212, as shown in Figure 2. The memory 208 may comprise a buffer which may be used to temporarily hold data received from the receiver 204 in preparation for storage or readout of data into and from the memory 208. The memory controller 212 receives memory control information from the receiver 204 to perform reads and writes of the data transmitted to the wireless device. As indicated in Figure 2, the memory controller 212 and the memory 208 may communicate bi-directionally. The memory 208 of the wireless device may be used to store various data libraries which may be continuously or regularly updated as data is received using the communications channels. The libraries may contain data previously sent by the server. By way of using these data libraries, processing at the wireless device is eliminated because previously stored information at the wireless device may be used in the decompression of data and the delivery of text at the wireless device by way of using the server's CPU (or processor), thereby obviating the need for a CPU (or processor) at the wireless device. Furthermore, without the need for a CPU, an operating system and its one or more applications configured for the operating system are not required at the wireless device. Consequently, a significant cost reduction of the wireless device may be realized and the wireless device may be referred to as a "brainless device or "brainless smartphone." In a representative embodiment, the server, at any time, may be used to update the libraries of the wireless device while decompression is performed. In addition, the server may update an image on the screen of the wireless device by way of selectively reading data previously stored in the one or more libraries of the wireless device. When displaying images on the wireless device, instead of transmitting data corresponding to the entire display of the wireless device, the server may only transmit a portion or subset of the image corresponding to the object or objects that are affected since it reuses data already stored in the memory 208 of the wireless device. Therefore, as a result, the one or more libraries may be used to rebuild text or images at the wireless device to support the decompression process performed at the server. The control information sent by the server is used by the memory controller 212 to properly address and read out the appropriate data from the libraries. As a result of using this decompression technique at the server, a processor at the wireless device is not required, and as a consequence, bandwidth may be reduced during the decompression process. As illustrated in Figure 2, the memory 208 outputs the decompressed data so that it may be presented to a user of the wireless device.

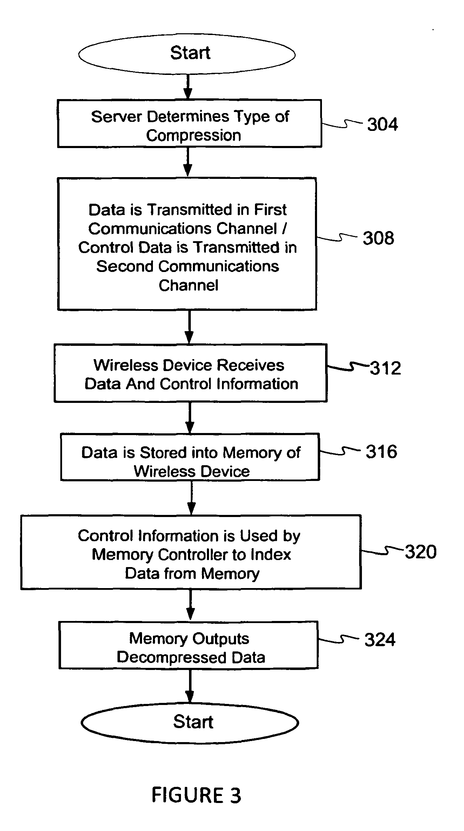

Figure 3 is an operational flow diagram of a method for decompressing data received by a device, in accordance with an embodiment of the invention. At step 304, a server determines the type of data compression to be used prior to transmitting the data to the device. Of course, the device may comprise the wireless device previously described in connection with Figures 1 and 2. The server may be controlled and owned by a wireless carrier or operator, for example. The server may determine the type of compression used based on the type of data to be transmitted to the wireless device. One or more libraries may be stored in the wireless device prior to the decompression process employed by the server. The libraries may be used to generate the desired text or image at the wireless device. The words in the libraries may be indexed by way of using control information transmitted by the server to the wireless device. As previously described, the data and the control signals/information may be sent to the wireless device using separate channels. Data decompression is employed at the server without using a processor or CPU at the wireless device. The decompression is performed with reduced bandwidth requirements by way of using the control signals to manipulate previously stored data in the wireless device's memory. At step 308, the server transmits the data using a first communications channel while the control information is transmitted using a second communications channel. Each of the two channels may transmit data bi-directionally as required. At step 312, the wireless device receives the data and the control information. The process further continues with step 316, in which the received data is stored into memory of the wireless device. The data may be used to update the one or more libraries previously stored in the memory. Thus, over time, the contents of the one or more libraries may increase in size, allowing the server to perform decompression at the wireless device more effectively. Next, at step 320, the received control information may be used by the memory controller to index data from memory. By way of indexing data in the memory, the desired data may be properly read out or output from the memory of the wireless device. Thus, at step 324, the memory outputs the desired decompressed data. The desired data may comprise text or image data to be displayed on the screen of the wireless device. The data that is read out may be concatenated to form the desired text or image. By way of the memory controller's use of the received control signals, the one or more processors located at the server may control what is stored into or read from the memory in the wireless device. The control signals may be used by the memory controller to effectively decompress data at the wireless device. Data may be appropriately written into or read out of the memory as controlled by the server using the control signals so as to build or construct the desired text or image at the wireless device.

The various aspects of the present invention may be realized in the form of hardware, software, or a combination thereof. The server, for example, may be realized using any kind of computer system or other apparatus adapted for carrying out the methods described herein. The server may comprise one or more processors and memory for storing software or a computer program wherein the one or more processors are used with the memory for executing the software or computer program to carry out the methods described in the present invention. The present invention may also be embedded in a computer program product, which comprises all the features enabling the implementation of the methods described herein, and which when loaded in the server, for example, is able to execute these methods. Computer program in the present context means any expression, in any language, code or notation, of a set of instructions intended to cause a system having an information processing capability to perform particular functions either directly or after either or both of the following: a) conversion to another language, code or notation; b) reproduction in a different material form.

While the invention has been described with reference to certain embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiments disclosed, but that the invention will include all embodiments falling within the scope of the appended claims.

## Claims

1. A method of providing data decompression at a processor-less device comprising:
receiving said data over a first communications channel and control signals over a second communications channel;
storing said data into a memory of said processor-less device; and
using said control signals by a memory controller of said processor-less device to specify and read one or more portions of said data from said memory; and
outputting said one or more portions as decompressed data.

2. The method of Claim 1 wherein said data and said control signals are received from a server that is part of a wireless carrier's network.

3. The method of Claim 1 wherein said data received by said processor-less device is used to build a library, wherein said data in said library is reused by said processor-less device to perform said decompression.

4. The method of Claim 3 wherein said library is updated when said data is stored into said memory.

5. The method of Claim 1 wherein said control signals are used by said memory controller for displaying an image on said processor-less device, said image generated by reusing said data stored in said memory.

6. The method of Claim 1 wherein said control signals are used by said memory controller for displaying text on said process-less device, said text generated by reusing said data stored in said memory.

7. The method of Claim 1 wherein said processor-less device comprises a wireless device.

8. The method of Claim 7 wherein said wireless device comprises smartphone.

9. The method of Claim 7 wherein any applications associated with said wireless device are executed using said processor in said server.

10. A processor-less device comprising:
a circuitry for receiving data and control signals comprising compressed data;
a memory for storing said data; and
a memory controller for controlling said memory using said control signals, said control signals specifying the reading and concatenating of one or more portions of said data from said memory, wherein said reading and said concatenating performs a decompression of said compressed data.

11. The device of Claim 10 wherein said data and control signals are received from a server that is part of a wireless carrier's network.

12. The device of Claim 10 wherein said data received by said processor-less device is used to build a library, wherein said one or more portions of said data in said library is reused by said processor-less device to perform said decompression.

13. The device of Claim 12 wherein said library is updated when said data is stored into said memory.

14. The device of Claim 10 wherein said control signals are used by said memory controller for displaying an image on said processor-less device, said image generated by reusing said data stored in said memory.

15. A system for transmitting data to a wireless device comprising:
a server comprising a processor, said server generating data and control signals; and
a processor-less wireless phone comprising:
a circuitry for receiving data and control signals from said server, said data and control signals comprising compressed data;
a memory for storing said data; and
a memory controller for controlling said memory using said control signals, said control signals specifying the reading and concatenating of one or more portions of said data from said memory, said server comprising a processor for generating said control signals, wherein said reading and said concatenating performs a decompression of said compressed data.

## Patentansprüche

1. Verfahren zum Bereitstellen von Datenkomprimierung an einem prozessorfreien Gerät, das umfasst:
Empfangen der Daten über einen ersten Kommunikationskanal und von Steuersignalen über einen zweiten Kommunikationskanal;
Speichern der Daten in einem Speicher des prozessorfreien Geräts; und
Verwenden der Steuersignale durch einen Speichercontroller des prozessorfreien Geräts, um einen oder mehrere Abschnitte der Daten aus dem Speicher zu spezifizieren und auszulesen; und
Ausgeben des einen oder der mehreren Abschnitte als dekomprimierte Daten.

2. Verfahren nach Anspruch 1, wobei die Daten und die Steuersignale von einem Server empfangen werden, der Teil eines Netzwerks eines drahtlosen Trägers ist.

3. Verfahren nach Anspruch 1, wobei die von dem prozessorfreien Gerät empfangenen Daten verwendet werden, um eine Bibliothek zu errichten, wobei die Daten in der Bibliothek von dem prozessorfreien Gerät wiederverwendet werden, um die Dekomprimierung durchzuführen.

4. Verfahren nach Anspruch 3, wobei die Bibliothek aktualisiert wird, wenn die Daten in dem Speicher gespeichert werden.

5. Verfahren nach Anspruch 1, wobei die Steuersignale von dem Speichercontroller verwendet werden, um ein Bild auf dem prozessorfreien Gerät anzuzeigen, wobei das Bild durch Wiederverwenden der in dem Speicher gespeicherten Daten erzeugt wird.

6. Verfahren nach Anspruch 1, wobei die Steuersignale von dem Speichercontroller verwendet werden, um Text auf dem prozessorfreien Gerät anzuzeigen, wobei der Text durch Wiederverwenden der in dem Speicher gespeicherten Daten erzeugt wird.

7. Verfahren nach Anspruch 1, wobei das prozessorfreie Gerät ein drahtloses Gerät aufweist.

8. Verfahren nach Anspruch 7, wobei das drahtlose Gerät ein Smartphone aufweist.

9. Verfahren nach Anspruch 7, wobei alle Anwendungen, die mit dem drahtlosen Gerät assoziiert sind, mittels des Prozessors in dem Server ausgeführt werden.

10. Prozessorfreies Gerät mit:
einer Schaltung zum Empfangen von Daten und Steuersignalen, die komprimierte Daten aufweisen;
einem Speicher zum Speichern der Daten; und
einem Speichercontroller zum Steuern des Speichers mittels der Steuersignale, wobei die Steuersignale das Auslesen und Verknüpfen einer oder mehrerer Abschnitte der Daten aus dem Speicher spezifizieren, wobei das Auslesen und das Verknüpfen eine Dekomprimierung der komprimierten Daten durchführt.

11. Gerät nach Anspruch 10, wobei die Daten und Steuersignale von einem Server empfangen werden, der Teil eines Netzwerks eines drahtlosen Trägers ist.

12. Gerät nach Anspruch 10, wobei die von dem prozessorfreien Gerät empfangenen Daten verwendet werden, um eine Bibliothek zu errichten, wobei der eine oder die mehreren Abschnitte der Daten in der Bibliothek von dem prozessorfreien Gerät wiederverwendet werden, um die Dekomprimierung durchzuführen.

13. Gerät nach Anspruch 12, wobei die Bibliothek aktualisiert wird, wenn die Daten in dem Speicher gespeichert werden.

14. Gerät nach Anspruch 10, wobei die Steuersignale von dem Speichercontroller verwendet werden, um ein Bild auf dem prozessorfreien Gerät anzuzeigen, wobei das Bild durch Wiederverwenden der in dem Speicher gespeicherten Daten erzeugt wird.

15. System zum Senden von Daten an ein drahtloses Gerät, das aufweist:
einen Server mit einem Prozessor, wobei der Server Daten und Steuersignale erzeugt; und
ein prozessorfreies drahtloses Telefon mit:
einer Schaltung zum Empfangen von Daten und Steuersignalen von dem Server, wobei die Daten und Steuersignale komprimierte Daten aufweisen;
einem Speicher zum Speichern der Daten; und
einem Speichercontroller zum Steuern des Speichers mittels der Steuersignale, wobei die Steuersignale das Auslesen und Verknüpfen einer oder mehrerer Abschnitte der Daten aus dem Speicher spezifizieren, wobei der Server einen Prozessor zum Erzeugen der Steuersignale aufweist, wobei das Auslesen und das Verknüpfen eine Dekomprimierung der komprimierten Daten durchführt.

## Revendications

1. Procédé de décompression de données dans un dispositif sans processeur comprenant :
la réception desdites données sur un premier canal de communication et de signaux de contrôle sur un deuxième canal de communication ;
le stockage desdites données dans une mémoire dudit dispositif sans processeur ; et
l'utilisation desdits signaux de contrôle par un contrôleur de mémoire dudit dispositif sans processeur pour spécifier et lire une ou plusieurs partie(s) desdites données dans ladite mémoire ; et
la délivrance en sortie desdites une ou plusieurs partie(s) sous la forme de données décompressées.

2. Procédé selon la revendication 1, dans lequel lesdites données et lesdits signaux de contrôle sont reçus d'un serveur qui fait partie d'un réseau de transport sans fil.

3. Procédé selon la revendication 1, dans lequel lesdites données reçues par ledit dispositif sans processeur sont utilisées pour construire une bibliothèque, dans lequel lesdites données dans ladite bibliothèque sont réutilisées par ledit dispositif sans processeur pour exécuter ladite décompression.

4. Procédé selon la revendication 3, dans lequel ladite bibliothèque est mise à jour lorsque lesdites données sont stockées dans ladite mémoire.

5. Procédé selon la revendication 1, dans lequel lesdits signaux de contrôle sont utilisés par ledit contrôleur de mémoire pour afficher une image sur ledit dispositif sans processeur, ladite image générée en réutilisant lesdites données stockées dans ladite mémoire.

6. Procédé selon la revendication 1, dans lequel lesdits signaux de contrôle sont utilisés par ledit contrôleur de mémoire pour afficher du texte sur ledit dispositif sans processeur, ledit texte généré en réutilisant lesdites données stockées dans ladite mémoire.

7. Procédé selon la revendication 1, dans lequel ledit dispositif sans processeur comprend un dispositif sans fil.

8. Procédé selon la revendication 7, dans lequel ledit dispositif sans fil comprend un téléphone intelligent.

9. Procédé selon la revendication 7, dans lequel de quelconques applications associées avec ledit dispositif sans fil sont exécutées en utilisant ledit processeur dans ledit serveur.

10. Dispositif sans processeur comprenant :
un circuit pour recevoir des données et des signaux de contrôle comprenant des données compressées ;
une mémoire pour stocker lesdites données ; et
un contrôleur de mémoire pour contrôler ladite mémoire en utilisant lesdits signaux de contrôle, lesdits signaux de contrôle spécifiant la lecture et la concaténation d'une ou plusieurs partie(s) desdites données dans ladite mémoire, dans lequel ladite lecture et ladite concaténation effectuent une décompression desdites données compressées.

11. Dispositif selon la revendication 10, dans lequel lesdites données et lesdits signaux de contrôle sont reçus d'un serveur qui fait partie d'un réseau de transport sans fil.

12. Dispositif selon la revendication 10, dans lequel lesdites données reçues par ledit dispositif sans processeur sont utilisées pour construire une bibliothèque, dans lequel lesdites une ou plusieurs partie(s) desdites données dans ladite bibliothèque sont réutilisées par ledit dispositif sans processeur pour exécuter ladite décompression.

13. Dispositif selon la revendication 12, dans lequel ladite bibliothèque est mise à jour lorsque lesdites données sont stockées dans ladite mémoire.

14. Dispositif selon la revendication 10, dans lequel lesdits signaux de contrôle sont utilisés par ledit contrôleur de mémoire pour afficher une image sur ledit dispositif sans processeur, ladite image générée en réutilisant lesdites données stockées dans ladite mémoire.

15. Système de transmission de données à un dispositif sans fil comprenant :
un serveur comprenant un processeur, ledit serveur générant des données et des signaux de contrôle ; et
un téléphone sans fil sans processeur comprenant :
un circuit pour recevoir des données et des signaux de contrôle dudit serveur, lesdites données et lesdits signaux de contrôle comprenant des données compressées ;
une mémoire pour stocker lesdites données ; et
un contrôleur de mémoire pour contrôler ladite mémoire en utilisant lesdits signaux de contrôle, lesdits signaux de contrôle spécifiant la lecture et la concaténation d'une ou plusieurs partie(s) desdites données dans ladite mémoire, ledit serveur comprenant un processeur pour générer lesdits signaux de contrôle, dans lequel ladite lecture et ladite concaténation effectuent une décompression desdites données compressées.
